# EUROPEAN PATENT APPLICATION

(11) **EP 4 534 832 A1**
(43) Date of publication of application: **09.04.2025**
(21) Application number: 22943467.5
(22) Date of filing: 17.10.2022
(51) Int. Cl.: F02P 9/00

(54) **HOT SURFACE COMBUSTION-SUPPORTING SYSTEM OF ENGINE**

(30) Priority: 25.05.2022 CN 202210573636
(71) Applicant: Chongqing Le-Mark Technology Co., Ltd., Chongqing 401329 (CN)
(72) Inventor: LEIGH, Peter, Chongqing 401329 (CN)
(74) Representative: Angerhausen, Christoph
(86) International application number: PCT/CN2022/125554
(87) International publication number: WO 2023/226279

(57) **Abstract**

The present utility model relates to the technical field of combustion-supporting of compression ignition engines, and provides a hot surface combustion-supporting system of an engine, for solving the problem in the prior art that direct use of methanol by an engine is affected due to the fact that methanol cannot be directly compression-ignited. Said system comprises: a hot surface igniter, which is used for igniting fuel of an engine; and a controller, which is used for performing temperature control of the hot surface igniter, can also communicate with an ECU of the engine, and is used for receiving a control signal of the ECU and a pre-set temperature value, and controlling on or off of the hot surface igniter according to the received control signal and the pre-set temperature value. The use of fuel having high latent heat of vaporization or high ignition temperature such as liquefied natural gas (LNG) in a compression ignition engine faces the same problem, which is covered by the present utility model, and to which the present utility model is applicable.

## Description

### TECHNICAL FIELD

The present utility model relates to the technical field of combustion-supporting of compression ignition engines, and specifically relates to a hot surface combustion-supporting system of an engine.

### BACKGROUND

Engines, as a machine capable of converting other forms of energy into mechanical energy, are widely used in various industries. Among these, the internal combustion engine is a heat engine that burns fuel inside a machine and directly converts discharged heat energy into power. Currently, petroleum resources are in short supply, while methanol, as a coal chemical industry, has a low cost; moreover, methanol produces no soot or low nitrogen oxide when burning, and has emissions far superior to conventional automotive fuel oil, thus being very suitable as an alternative energy source of engines.

However, a methanol material has the characteristics such as high latent heat of vaporization and high ignition temperature, and if a methanol material is directly injected into a combustion chamber of a compression ignition engine, fuel cannot be ignited. The existing technical solution of methanol-diesel dual fuel has the problems that the low ratio of use of methanol causes limited reduction of fuel costs and limited emission level improvement, that the system is complex, and that costs for upgrading hardware are too high, and is thus unable to gain market acceptance.

### SUMMARY

The present utility model is intended to provide a hot surface combustion-supporting system of an engine, for solving the problem in the prior art that direct use of methanol by an engine is affected due to the fact that methanol cannot be directly compression-ignited.

The present utility model provides the following basic solution: a hot surface combustion-supporting system of an engine, comprising: a hot surface igniter, which is used for igniting fuel of an engine; and a controller, which is used for performing temperature control of the hot surface igniter, can also communicate with an ECU of the engine, and is used for receiving a control signal of the ECU and a pre-set temperature value, and controlling on or off of the hot surface igniter according to the received control signal and the pre-set temperature value.

Beneficial effects of the basic solution are: in the process of using methanol as fuel of a compression ignition engine, as the autoignition temperature of the methanol fuel is relatively high, it is difficult to perform compression ignition combustion on the methanol fuel when a compression ignition engine is used, thus arising the problem that normal ignition and use cannot be achieved. Furthermore, if methanol cannot be ignited quickly when injected into an engine, unburned methanol flows down along a cylinder wall and destroys a lubricating oil film on the surface of the cylinder wall, thereby increasing wear of the cylinder, and the unburned methanol also forms with lubricating oil of an engine lubrication system an emulsion, reducing the lubrication effect of the lubricating oil on various parts of the engine, thus accelerating wear of various parts of the engine, eventually shortening the service life of the engine.

Thus, in this solution, a hot surface combustion-supporting system is used to carry out combustion-supporting on methanol, so that methanol can be successfully ignited, thereby ensuring that an engine can be used when methanol is used directly, without being affected by working conditions and environmental changes. Furthermore, the successful ignition of methanol can also avoid the problem of a shortened service life of an engine caused by unburned methanol entering the interior of the engine, and can also prolong the service life of an engine.

Preferred solution I: as a preference of the basic solution, further comprising a temperature measurement thermocouple, which is used for measuring an ignition temperature value of the hot surface igniter; the controller also receives the ignition temperature value and compares it with the pre-set temperature value; when it is determined by means of comparison that the ignition temperature value is lower than the pre-set temperature value, the controller controls the hot surface igniter to increase the ignition temperature, and when it is determined by means of comparison that the ignition temperature value is higher than the pre-set temperature value, the controller controls the hot surface igniter to decrease the ignition temperature. Beneficial effect: in this solution, the temperature control effect on the hot surface igniter can also be achieved by the conjunctive use of the temperature measurement thermocouple and the controller, thereby further ensuring the normal start of the engine.

Preferred solution II: as a preference of the preferred solution I, the temperature measurement thermocouple is located in the hot surface igniter. Beneficial effect: in this solution, the configuration in which the temperature measurement thermocouple is located in the hot surface igniter increases the accuracy of temperature measurement of the hot surface igniter, thereby ensuring accurate temperature control of the hot surface igniter.

Preferred solution III: as a preference of any one of the basic solution to preferred solution II, the hot surface igniter is a ceramic igniter. Beneficial effect: ceramic is corrosion resistant, has a long service life, and is not easily oxidized, thus being suitable for use in special scenarios with higher requirements.

Preferred solution IV: as a preference of preferred solution II, when it is determined by comparison that the ignition temperature value is lower than the pre-set temperature value, the controller controls a circuit of the hot surface igniter to increase the voltage, and when it is determined by comparison that the ignition temperature value is higher than the pre-set temperature value, the controller controls the circuit of the hot surface igniter to decrease the voltage. Beneficial effect: in this solution, increase and decrease of the ignition temperature of the hot surface igniter is realized by controlling increase and decrease of the voltage in the circuit of the hot surface igniter, allowing for simple operation.

Preferred solution V: as a preference of preferred solution IV, a voltage controller is provided in the circuit of the hot surface igniter, and is used for controlling increase and decrease of the voltage of the hot surface igniter. Beneficial effect: in this solution, increase and decrease of the voltage of the hot surface igniter is realized by the voltage controller provided in the circuit of the hot surface igniter, allowing for a simple structure.

### BRIEF DESCRIPTION OF THE DRAWINGS

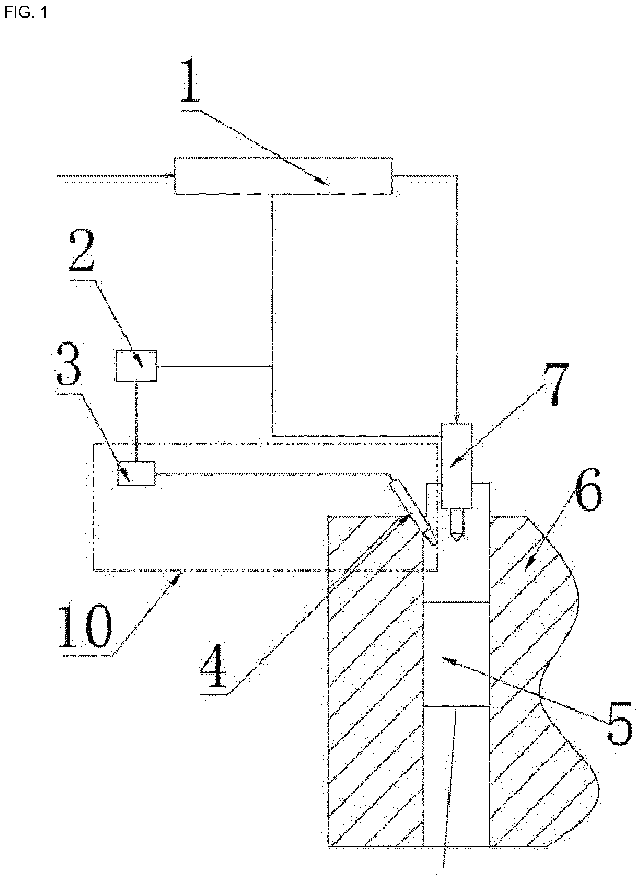

Figure 1 is a schematic diagram of a hot surface combustion-supporting system of an engine according to an embodiment of the present utility model.

### DETAILED DESCRIPTION OF THE EMBODIMENTS

The following gives more details by means of specific embodiments:
Reference signs in the drawing accompanying the description comprise: hot surface combustion-supporting system 10, oil supply system 1, ECU 2, controller 3, hot surface igniter 4, piston 5, engine 6, and oil injection system 7.

An embodiment is basically as shown in figure 1: a hot surface combustion-supporting system 10 of an engine, comprising: a hot surface igniter 4, which is used for igniting fuel of an engine 6, wherein in this embodiment, the hot surface igniter 4 is a ceramic igniter;
a temperature measurement thermocouple located in the hot surface igniter 4, which is used for measuring an ignition temperature value of the hot surface igniter 4; and
a controller 3, which communicates with the ECU 2 of the engine 6, is used for receiving a control signal of the ECU and a pre-set temperature value, and controlling on or off of the hot surface igniter 4 according to the received control signal; the controller further receives an ignition temperature value and compares it with the pre-set temperature value; when it is determined by means of comparison that the ignition temperature value is lower than the pre-set temperature value, the controller controls the hot surface igniter 4 to increase the ignition temperature, and when it is determined by means of comparison that the ignition temperature value is higer than the pre-set temperature value, the controller controls the hot surface igniter 4 to decrease the ignition temperature.

Specifically, a voltage controller 3 for increasing and decreasing the voltage of the hot surface igniter 4 is provided in a circuit of the hot surface igniter 4; when it is determined by means of comparison that the ignition temperature value is lower than the pre-set temperature value, the controller 3 controls the voltage controller 3 to increase the voltage; and when it is determined by means of comparison that the ignition temperature value is higher than the pre-set temperature value, the controller 3 controls the voltage controller 3 to decrease the voltage.

The specific implementation process is as follows: before the hot surface combustion-supporting system 10 according to this embodiment is used, a heating end of the hot surface igniter 4 is required to be extended into the cylinder of the direct injection engine 6, and the heating end is located above a piston 5. When in use, an oil supply system 1 of the engine 6 supplies fuel, and then the fuel is injected into the cylinder by an oil injection system 7; while the fuel being injected into the cylinder, the ECU2 of the engine 6 sends an on signal to the controller 3; the controller 3 makes the hot surface igniter 4 start; and the temperature of the heating end of the hot surface igniter 4 increases, so as to perform hot surface combustion-supporting ignition on the fuel. In this embodiment, the fuel is methanol.

What is described is merely an embodiment of the present utility model, and common knowledge such as specific structures and characteristics in the solution which are well-known in the artis not described here too much. A person skilled in the art is aware of all the common technical knowledge and have access to all the technologies existing before the filing date or the priority date in the technical field to which the utility model pertains, and has capacity to apply all the routine experimental means before that date. With the motivation provided in the present application and by combining same with self-capability, a person skilled in the art can improve and implement the present solution, and some typical well-known structures or well-known methods should not become a barrier to the implementation of the present application for a person skilled in the art. It should be noted that, a person skilled in the art can further make various modifications and improvements without departing from the structure of the present invention, and these modifications and improvements should also be considered as belonging to the scope of protection of the present utility model, and these modifications and improvements do not affect the effect of the implementation of the present utility model and the applicability of patent. The scope of protection of the present application shall be subject to the content of the claims, and the disclosure in the description such as specific embodiments can be used to interpret the content of the claims.

## Claims

1. A hot surface combustion-supporting system of an engine, comprising:
a hot surface igniter, which is used for igniting fuel of an engine; and
a controller, which is used for performing temperature control of the hot surface igniter, can also communicate with an ECU of the engine, and is used for receiving a control signal of the ECU and a pre-set temperature value, and controlling on or off of the hot surface igniter according to the received control signal and the pre-set temperature value.

2. The hot surface combustion-supporting system of an engine according to claim 1, further comprising a temperature measurement thermocouple, which is used for measuring an ignition temperature value of the hot surface igniter,
wherein the controller also receives the ignition temperature value and compares it with the pre-set temperature value; when it is determined by means of comparison that the ignition temperature value is lower than the pre-set temperature value, the controller controls the hot surface igniter to increase the ignition temperature, and when it is determined by means of comparison that the ignition temperature value is higher than the pre-set temperature value, the controller controls the hot surface igniter to decrease the ignition temperature.

3. The hot surface combustion-supporting system of an engine according to claim 2, wherein the temperature measurement thermocouple is located in the hot surface igniter.

4. The hot surface combustion-supporting system of an engine according any one of claims 1-3, wherein the hot surface igniter is a ceramic igniter.

5. The hot surface combustion-supporting system of an engine according to claim 2, wherein when it is determined by comparison that the ignition temperature value is lower than the pre-set temperature value, the controller controls a circuit of the hot surface igniter to increase the voltage, and when it is determined by comparison that the ignition temperature value is higher than the pre-set temperature value, the controller controls the circuit of the hot surface igniter to decrease the voltage.

6. The hot surface combustion-supporting system of an engine according to claim 5, wherein a voltage controller is provided in the circuit of the hot surface igniter, and is used for controlling increase and decrease of the voltage of the hot surface igniter.
